# EUROPEAN PATENT APPLICATION

(11) **EP 4 546 119 A1**
(43) Date of publication of application: **30.04.2025**
(21) Application number: 24738767.3
(22) Date of filing: 05.01.2024
(51) Int. Cl.: G06F 8/65, G06F 8/71, H04L 67/00, H04L 61/3015

(54) **SOFTWARE UPDATE DEVICE AND SYSTEM**

(30) Priority: 05.01.2023 KR 20230001973
(71) Applicant: LG Energy Solution, Ltd., Seoul 07335 (KR)
(72) Inventor: LEE, Hu-Jun, Daejeon 34122 (KR); YANG, Seong-Yeol, Daejeon 34122 (KR)
(74) Representative: Plasseraud IP
(86) International application number: PCT/KR2024/000293
(87) International publication number: WO 2024/147699

(57) **Abstract**

A software update apparatus according to an embodiment of the present disclosure includes a communication unit connected to enable communication with a target device; and a control unit configured to generate an identifier corresponding to the target device and transmit the identifier and software corresponding to the target device to the target device through the communication unit.

## Description

### TECHNICAL FIELD

The present application claims priority to Korean Patent Application No. 10-2023-0001973 filed on January 5, 2023 in the Republic of Korea, the disclosures of which are incorporated herein by reference.

The present disclosure relates to a software update apparatus and system, and more specifically, to a software update apparatus and system that may increase the efficiency of updating software installed on a plurality of electronic devices.

### BACKGROUND ART

Recently, the demand for portable electronic products such as notebook computers, video cameras and portable telephones has increased sharply, and electric vehicles, energy storage batteries, robots, satellites and the like have been developed in earnest. Accordingly, high-performance batteries allowing repeated charging and discharging are being actively studied.

Batteries commercially available at present include nickel-cadmium batteries, nickel hydrogen batteries, nickel-zinc batteries, lithium batteries and the like. Among them, the lithium batteries are in the limelight since they have almost no memory effect compared to nickel-based batteries and also have very low self-charging rate and high energy density.

During the battery production process, battery parts or produced batteries are moved in trays. If an impact occurs due to a collision between trays or with production equipment while the battery is being moved, the quality of the battery may deteriorate, so the tray may be equipped with a sensor that may detect impact and position. At least one sensor is attached to each tray, so hundreds to hundreds of thousands of sensors are needed. Since sensors are a type of electronic device, they include hardware that manages the internal operation (e.g., a control unit or processor) and software or firmware to control such hardware.

Meanwhile, software needs to be updated regularly or irregularly, and each sensor is updated with new software that differs only in the identifier that identifies the sensor.

Conventionally, when updating sensor software, in order to assign a different unique identifier to each sensor, it is necessary to change only the identifier of the sensor on which the software is to be installed in the new software. For example, if there are hundreds of thousands of sensors, even if the software is the same version, hundreds of thousands of operations are needed to ensure that only the identifier to identify the sensor is different when installing or updating the software on each sensor.

The task of assigning the identifier of the electronic device on which the software will be installed to software may be referred to as an identifier allocation task. This identifier allocation task may be performed by humans, and therefore there is a possibility of human error.

Therefore, technology that may minimize the possibility of errors occurring during software update is required.

### DISCLOSURE

### Technical Problem

The present disclosure is designed to solve the problems of the related art, and therefore the present disclosure is directed to providing a software update apparatus and system that may update software with more accuracy and improved efficiency.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

A software update apparatus according to one aspect of the present disclosure comprises a communication unit connected to enable communication with a target device; and a control unit configured to generate an identifier corresponding to the target device and transmit the identifier and software corresponding to the target device to the target device through the communication unit.

The target device may be provided in plural.

The control unit may be configured to generate an identifier corresponding to each of the plurality of target devices and transmit the identifier corresponding to each of the plurality of target devices and the software through the communication unit.

The control unit may be configured to generate the identifiers respectively corresponding to the plurality of target devices so as not to overlap each other.

The control unit may be configured to sequentially transmit the software and the corresponding identifier to each of the plurality of target devices through the communication unit.

The control unit may be configured to transmit the software and the identifier to a target device of a previous order through the communication unit, then generate an identifier corresponding to a target device of a next order, and transmit the software and the generated identifier to the target device of the next order through the communication unit.

The control unit may be configured to determine that the software update is completed when there is no target device in the next order.

The software update apparatus according to another aspect of the present disclosure may further comprise a storage unit configured to store information about the generated identifier.

The control unit may be configured to transmit only the software to the target device through the communication unit when information about the identifier corresponding to the target device is already stored in the storage unit.

A software update system according to still another aspect of the present disclosure may comprise the software update apparatus according to one aspect of the present disclosure; and the target device.

The target device may be configured to update its software with the received software and allocate its identifier with the received identifier.

The software update system according to still another aspect of the present disclosure may further comprise a software transmission device configured to transmit the software to the software update apparatus.

### Advantageous Effects

According to one aspect of the present disclosure, when updating software, there is an advantage in being able to allocate identifiers to a plurality of electronic devices in a simple manner.

The effects of the present disclosure are not limited to the effects mentioned above, and other effects not mentioned will be clearly understood by those skilled in the art from the description of the claims.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram schematically showing a software update apparatus according to an embodiment of the present disclosure.
FIG. 2 is a diagram schematically showing the software update apparatus and a plurality of target devices.
FIG. 3 is a diagram schematically showing software versions and identifiers of the plurality of target devices.
FIG. 4 is a diagram schematically showing a software update system according to another embodiment of the present disclosure.

### BEST MODE

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Additionally, in describing the present disclosure, when it is deemed that a detailed description of relevant known elements or functions renders the key subject matter of the present disclosure ambiguous, the detailed description is omitted herein.

The terms including the ordinal number such as "first", "second" and the like, may be used to distinguish one element from another among various elements, but not intended to limit the elements by the terms.

Throughout the specification, when a portion is referred to as "comprising" or "including" any element, it means that the portion may include other elements further, without excluding other elements, unless specifically stated otherwise.

In addition, throughout the specification, when a portion is referred to as being "connected" to another portion, it is not limited to the case that they are "directly connected", but it also includes the case where they are "indirectly connected" with another element being interposed between them.

Hereinafter, preferred embodiments of the present disclosure will be described in detail with reference to the accompanying drawings.

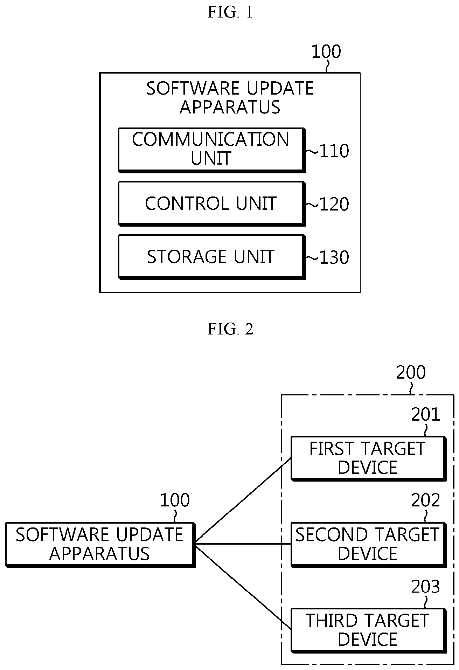

FIG. 1 is a diagram schematically showing a software update apparatus 100 according to an embodiment of the present disclosure.

Referring to FIG. 1, the software update apparatus 100 may include a communication unit 110 and a control unit 120.

The communication unit 110 may be connected to enable communication with a target device.

Specifically, the communication unit 110 may be connected to enable wired and/or wireless communication with the target device. For example, the communication unit 110 may transmit data to the target device, and the target device may receive the data from the communication unit 110. Here, data may be applied without limitation as long as it can be transmitted.

Here, the target device may be a device on which software can be installed. For example, the target device may be a sensor on which the software received from the communication unit 110 may be installed. In this case, the software may include various information such as a sensing target, a sensing conditions, a sensing cycle, and a sensing result storage method of the sensor. In other words, when software is newly installed or updated, the sensor may be operated according to the contents included in the software.

Hereinafter, "software update" is explained to refer to both newly installing software and updating the version of installed software. Here, "updating the version of installed software" includes upgrading or downgrading the version of software set on the target device.

The communication unit 110 may be connected to the control unit 120 to enable wired and/or wireless communication. Preferably, the communication unit 110 may receive a command signal from the control unit 120 and operate to correspond to the content included in the command signal. For example, when the communication unit 110 receives a transmission command from the control unit 120, the communication unit 110 may transmit items included in the transmission command to the target device. As another example, when the communication unit 110 receives a sleep command from the control unit 120, the communication unit 110 may operate in a sleep mode. As another example, when the communication unit 110 receives a wake-up command from the control unit 120, the communication unit 110 may operate in a wake-up mode.

The control unit 120 may be configured to generate an identifier corresponding to the target device.

Here, the identifier is a unique value given to the target device. In other words, the identifier may be said to be the ID (identification) of the target device. The control unit 120 may detect a connected target device and generate an identifier corresponding to the target device.

The control unit 120 may be configured to transmit the identifier and software corresponding to the target device to the target device through the communication unit 110.

The control unit 120 may transmit the software subject to update and the generated identifier to the target device through the communication unit 110. Specifically, the control unit 120 may transmit a transmission command for software and identifier to the communication unit 110. In other words, the transmission command may include information about software and identifier as the transmission target. The communication unit 110 may interpret the transmission command received from the control unit 120 and transmit software and identifier to the target device.

Also, the target device may be configured to update its software with the received software. Additionally, the target device may be configured to allocate its own identifier with the received identifier. In other words, according to the software update apparatus 100, software update and identifier allocation for the target device may be systematically performed simultaneously.

The software update apparatus 100 according to an embodiment of the present disclosure has the advantage of routinely performing software update and identifier allocation of the target device. In other words, since human error is eliminated in the identifier allocation process of the target device, the identifier of the target device may be allocated more quickly and accurately.

Meanwhile, the control unit 120 provided in the software update apparatus 100 may selectively include processors known in the art, application-specific integrated circuits (ASICs), other chipsets, logic circuits, registers, communication modems, data processing devices, and the like to execute various control logic performed in the present disclosure. Also, when the control logic is implemented in software, the control unit 120 may be implemented as a set of program modules. At this time, the program module may be stored in a memory and executed by the control unit 120. The memory may be located inside or out of the control unit 120 and may be connected to the control unit 120 by various well-known means.

Referring to FIG. 1, the software update apparatus 100 may further include a storage unit 130.

Here, the storage unit 130 may store data necessary for operation and function of each component of the software update apparatus 100, data generated in the process of performing the operation or function, or the like. The storage unit 130 is not particularly limited in its type as long as it is a known information storage means that can record, erase, update and read data. As an example, the information storage means may include RAM, flash memory, ROM, EEPROM, registers, and the like. In addition, the storage unit 130 may store program codes in which processes executable by the control unit 120 are defined.

The storage unit 130 may be configured to store information about the generated identifier. Additionally, the storage unit 130 may store information about software. When the communication unit 110 receives a transmission command for software and identifier from the control unit 120, the communication unit 110 may transmit the information about software and identifier stored in the storage unit 130 to the target device.

If the information about the identifier corresponding to the target device is already stored in the storage unit 130, the control unit 120 may be configured to transmit only the software to the target device through the communication unit 110.

If the identifier has already been allocated to the target device, there is no need to re-allocate the identifier, so the control unit 120 may transmit a transmission command for software to the communication unit 110. The communication unit 110 may receive the transmission command and transmit only the information about software to the target device.

Specifically, before transmitting a transmission command to the communication unit 110, the control unit 120 may first determine whether an identifier is allocated to the target device. Also, if the identifier has already been allocated to the target device, the control unit 120 may transmit a transmission command for software to the communication unit 110. Conversely, if an identifier is not allocated to the target device, the control unit 120 may generate an identifier corresponding to the target device and transmit a transmission command for software and the identifier to the communication unit 110.

FIG. 2 is a diagram schematically showing the software update apparatus 100 and a plurality of target devices 200.

The target device may be provided in plural.

Specifically, the plurality of target devices 200 are devices on which the same software can be installed. For example, in the embodiment of FIG. 2, the plurality of target devices 200 may include a first target device 201, a second target device 202, and a third target device 203.

The control unit 120 may be configured to generate an identifier corresponding to each of the plurality of target devices 200.

Specifically, the control unit 120 may be configured to generate identifiers respectively corresponding to the plurality of target devices 200 so as not to overlap each other.

For example, in the embodiment of FIG. 2, the control unit 120 may generate an identifier corresponding to the first target device 201, an identifier corresponding to the second target device 202, and an identifier corresponding to the third target device 203 differently. Because the identifier is a unique value allocated to each of the plurality of target devices 200, the control unit 120 may generate identifiers corresponding to the plurality of target devices 200 not to overlap each other.

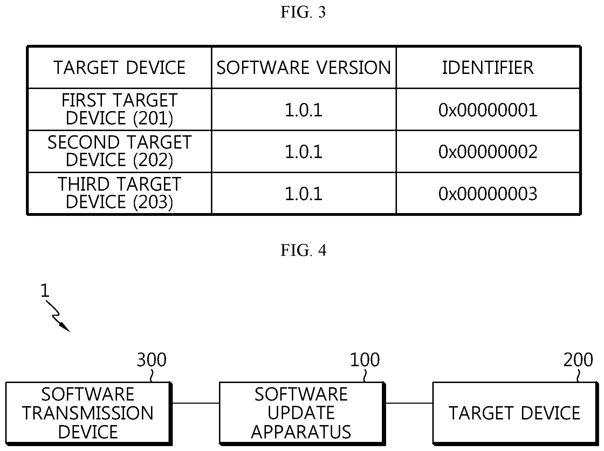

FIG. 3 is a diagram schematically showing software versions and identifiers of the plurality of target devices 200. Specifically, FIG. 3 is a diagram showing the software version of the plurality of target devices 200 and the identifiers expressed in hexadecimal.

For example, in the embodiment of FIG. 3, the identifier of the first target device 201 is 0x00000001, the identifier of the second target device 202 is 0x00000002, and the identifier of the third target device 203 is 0x00000003. For example, if there are 100,000 target devices, the identifier of the 100,000^{th} target device is 0x000186A0.

The control unit 120 may be configured to transmit an identifier corresponding to each of the plurality of target devices 200 and software through the communication unit 110.

The control unit 120 may transmit the software and identifier corresponding to each of the plurality of target devices 200 by transmitting a transmission command for software and identifier to the communication unit 110.

The control unit 120 may be configured to sequentially transmit an identifier corresponding to software to each of the plurality of target devices 200 through the communication unit 110.

Specifically, the control unit 120 may be configured to transmit software and an identifier to the target device of the previous order through the communication unit 110 and then generate an identifier corresponding to the target device of the next order. Additionally, the control unit 120 may be configured to transmit software and the generated identifier to the target device of the next order through the communication unit 110.

Here, the control unit 120 may generate an identifier corresponding to the target device in the first order, and transmit a transmission command for the software and the generated identifier to the communication unit 110. Afterwards, the control unit 120 may generate an identifier corresponding to the target device of the next order.

For example, in the embodiments of FIGS. 2 and 3, it is assumed that software and identifiers are transmitted in the order of the first target device 201, the second target device 202, and the third target device 203. First, the control unit 120 may generate an identifier (0x00000001) corresponding to the first target device 201. Also, the control unit 120 may transmit a transmission command for software and identifier (0x00000001) to the communication unit 110. Next, the control unit 120 may generate an identifier (0x00000002) corresponding to the second target device 202. Also, the control unit 120 may transmit a transmission command for software and identifier (0x00000002) to the communication unit 110. Finally, the control unit 120 may generate an identifier (0x00000003) corresponding to the third target device 203. Additionally, the control unit 120 may transmit a transmission command for software and identifier (0x00000003) to the communication unit 110.

The control unit 120 may be configured to determine that the software update is completed when there is no target device in the next order.

In the previous embodiment, because the fourth target device is not provided, the control unit 120 may determine that the software update is completed after transmitting a transmission command for the software and the identifier (0x00000003) corresponding to the third target device 203 to the communication unit 110.

According to the software update apparatus 100 according to an embodiment of the present disclosure, since a person is not required to directly allocate an identifier to the target device, human error may not occur in the identifier allocation process. Additionally, because the identifier of the target device is allocated and transmitted systematically, the identifier allocation of the target device may proceed more quickly.

FIG. 4 is a diagram schematically showing a software update system 1 according to another embodiment of the present disclosure.

The software update system 1 according to another embodiment of the present disclosure may include the software update apparatus 100 and a target device.

The target device may be configured to update its software with the received software. Also, the target device may be configured to allocate its identifier with the received identifier.

For example, in the embodiment of FIG. 3, the first target device 201 may receive software (version 1.0.1) and identifier (0x00000001) from the software update apparatus 100. Also, the first target device 201 may newly install or update its software to version 1.0.1. Additionally, the first target device 201 may set its identifier to 0x00000001.

Likewise, the second target device 202 may receive software (version 1.0.1) and identifier (0x00000002) from the software update apparatus 100. Also, the second target device 202 may newly install or update its software to version 1.0.1. Additionally, the second target device 202 may set its identifier to 0x00000002.

Finally, the third target device 203 may receive software (version 1.0.1) and identifier (0x00000003) from the software update apparatus 100. Also, the third target device 203 may newly install or update its software to version 1.0.1. Additionally, the third target device 203 may set its identifier to 0x00000003.

Referring to FIG. 4, the software update system 1 may further include a software transmission device 300.

The software transmission device 300 may be configured to transmit software to the software update apparatus 100.

That is, the software update apparatus 100 may transmit the software received from the software transmission device 300 to the target device along with the generated identifier.

According to the software update system 1 according to an embodiment of the present disclosure, software update and identifier allocation may be systematically performed routinely.

The embodiments of the present disclosure described above may not be implemented only through an apparatus and a method, but may be implemented through a program that realizes a function corresponding to the configuration of the embodiments of the present disclosure or a recording medium on which the program is recorded. The program or recording medium may be easily implemented by those skilled in the art from the above description of the embodiments.

The present disclosure has been described in detail. However, the detailed description and specific examples, while indicating preferred embodiments of the disclosure, are given by way of illustration only, since various changes and modifications within the scope of the disclosure will become apparent to those skilled in the art from this detailed description.

Additionally, many substitutions, modifications and changes may be made to the present disclosure described hereinabove by those skilled in the art without departing from the technical aspects of the present disclosure, and the present disclosure is not limited to the above-described embodiments and the accompanying drawings, and each embodiment may be selectively combined in part or in whole to allow various modifications.

### (Explanation of reference signs)

1: software update system
100: software update apparatus
110: communication unit
120: control unit
130: storage unit
200: target device
300: software transmission device

## Claims

1. A software update apparatus, comprising:
a communication unit connected to enable communication with a target device; and
a control unit configured to generate an identifier corresponding to the target device and transmit the identifier and software corresponding to the target device to the target device through the communication unit.

2. The software update apparatus according to claim 1,
wherein the target device is provided in plural, and
wherein the control unit is configured to generate an identifier corresponding to each of the plurality of target devices and transmit the identifier corresponding to each of the plurality of target devices and the software through the communication unit.

3. The software update apparatus according to claim 2,
wherein the control unit is configured to generate the identifiers respectively corresponding to the plurality of target devices so as not to overlap each other.

4. The software update apparatus according to claim 2,
wherein the control unit is configured to sequentially transmit the software and the corresponding identifier to each of the plurality of target devices through the communication unit.

5. The software update apparatus according to claim 4,
wherein the control unit is configured to transmit the software and the identifier to a target device of a previous order through the communication unit, then generate an identifier corresponding to a target device of a next order, and transmit the software and the generated identifier to the target device of the next order through the communication unit.

6. The software update apparatus according to claim 5,
wherein the control unit is configured to determine that the software update is completed when there is no target device in the next order.

7. The software update apparatus according to claim 1, further comprising:
a storage unit configured to store information about the generated identifier.

8. The software update apparatus according to claim 7,
wherein the control unit is configured to transmit only the software to the target device through the communication unit when information about the identifier corresponding to the target device is already stored in the storage unit.

9. A software update system, which comprises the software update apparatus according to any one of claims 1 to 8; and the target device,
wherein the target device is configured to update its software with the received software and allocate its identifier with the received identifier.

10. The software update system according to claim 9, further comprising:
a software transmission device configured to transmit the software to the software update apparatus.
